# EUROPÄISCHE PATENTSCHRIFT

(11) **EP 1 715 096 B1**
(45) Veröffentlichungstag und Bekanntmachung des Hinweises auf die Patenterteilung: **23.07.2008**
(21) Anmeldenummer: 06006011.8
(22) Anmeldetag: 23.03.2006
(51) Int. Cl.: D06F 37/26

(54) **Kunststofflaugenbehälter für eine Waschmaschine und Verfahren zur Herstellung eines Kunststofflaugenbehälters**
Plastic tub for a washing machine and method for manufacturing such a tub
Cuve en plastique pour machine à laver et procédé de fabrication d'une telle cuve

(30) Priorität: 19.04.2005 DE 102005018190
(43) Veröffentlichungstag der Anmeldung: 25.10.2006
(73) Patentinhaber: Miele & Cie. KG, 33332 Gütersloh (DE)
(72) Erfinder: Brinkmann, Martin, 33397 Rietberg (DE); Dahlmann, Udo, 33378 Rheda-Wiedenbrück (DE); Hollenhorst, Matthias, 59556 Lippstadt (DE); Kratzsch, Andreas Dr., 33719 Bielefeld (DE)

(56) Entgegenhaltungen:
- EP-A- 0 219 115
- EP-A- 1 528 136
- GB-A- 2 333 300

## Beschreibung

Die Erfindung betrifft einen Kunststofflaugenbehälter für eine Waschmaschine umfassend ein zylinderförmig geformtes Behältnis, welches aus einer spritzgegossenen Kunststoffmasse besteht, mit einem Mantel und zumindest einer Stirnseitenwand, wobei in der Stirnseitenwand ein metallisches Lagerkreuz mit einer hülsenartigen Nabe und mit zumindest einer an der Nabe angeformten Strebe in der Kunststoffmasse eingebunden ist. Die Erfindung betrifft weiterhin ein Verfahren zur Herstellung eines solchen Kunststofflaugenbehälters.

Bekannt sind Kunststofflaugenbehälter für Waschmaschinen, in denen die Trommel angeordnet ist. Aus der nachveröffentlichten EP 1 528 136 A2 ist insbesondere ein Laugenbehälter bekannt, der einen zylinderförmigen Behälter umfasst, wobei zur Rückseite der Maschine das zylinderförmige Behältnis in der sich bildenden Stirnseitenwand ein metallisches Lagerkreuz mit einer hülsenartigen Nabe zur Aufnahme einer Antriebswelle in der Trommel in der Kunststoffmasse eingebunden ist. Der Kunststofflaugenbehälter wird in einer Spritzgussform geformt, wobei das metallische Lagerkreuz in der Form umspritzt wird. Die Anspritzung erfolgt dabei über einen so genannten Schirmguss, der zentral über die Nabe zum vollständigen Füllen der Spritzgussform vorgenommen wird. Beim Spritzformen muss darauf geachtet werden, dass das Lagerkreuz allseitig mit Kunststoffschmelze umschlossen wird.

Beim Umspritzen des metallischen Lagerkreuzes bzw. auch von metallischen Bauteilen kommt es vor, dass sich beim Umströmen Fließfronten bilden, die nach dem Zusammentreffen die sogenannten Bindenähte verursachen. Dadurch, dass sich die Schmelzfronten während des Spritzgießvorgangs geringfügig abkühlen und eine Haut bilden oder partiell verfestigen, ist die Verbindung mit einer anderen Schmelzfront geschwächt ausgeprägt. Die hierdurch entstandenen Bindenähte haben die unerwünschte Eigenschaft, dass sie eine geringere Festigkeit aufweisen, als die restlichen mit Kunststoff überdeckten Bereiche. Bei der Bildung derartiger Bindenähte in der Spritzgussform kann es vorkommen, dass bei Verwendung von zusätzlich in der Schmelze eingebrachten Fasern sich diese Bindenähte und die Fasern in Längsrichtung zueinander ausrichten, was ebenfalls die unerwünschte Eigenschaft einer geringeren Festigkeit gegenüber der restlichen mit Kunststoffmasse überdeckten Bereiche hat. Diese Bindenähte liegen bei einer Anspritzung von der Außenseite des Laugenbehälters insbesondere auf der Rückseite des metallischen Lagerkreuzes, also an der Innenseite des Laugenbehälters und hier unterhalb der Lagerkreuzarme. Der Grund dafür liegt darin, dass während des Spritzgießens bei einem Lagerkreuz mit symmetrischen Lagekreuzarmen diese gleichmäßig von der Schmelze umströmt werden, wodurch sich jeweils Fließfronten bilden, die jeweils seitlich am Lagerkreuzarm herunterfließen und unterhalb der Lagerkreuzarme zusammentreffen und dort nach dem Erkalten des Kunststoffs diese so genannten Bindenähte bilden. Weiterhin wird beim Füllen der Spritzgießform über einen zentralen Anguss die Faserorientierung des Kunststoffes vornehmlich in radialer Richtung des Laugenbehälters verlaufen, was für den Betriebslastfall nicht unbedingt günstig ist.

Aus der britischen Offenlegungsschrift GB 2 333 300 A ist ein Kunststofflaugenbehälter mit einer umspritzten Nabe bekannt. Um eine möglichst stabile und kräftemäßig belastbare Verbindung zwischen Nabe und der Rückwand des Kunststofflaugenbehälters bereitzustellen, ist an der Lagerhülse der Nabe eine zusätzliche umlaufende glockenförmige Verstärkung angeformt. Ein Teil der Lagerhülse und die glockenförmige Verstärkung wird in der Kunststoffmasse eingebettet, so dass eine Kraftverteilung auf eine größere Fläche aus der Rückwand erfolgt. Zur weiteren Verstärkung sind dem Kräfteaufkommen entsprechend in der Kunststoffrückwand Verstärkungsrippen angeformt.

Der Erfindung liegt somit die Aufgabe zugrunde, einen Laugenbehälter aus Kunststoff mit einer umspritzten Nabe und/oder Lagerkreuz bereitzustellen, welcher den auftretenden Lastfällen wesentlich besser gerecht wird.

Erfindungsgemäß wird dieses Problem mit den Merkmalen der unabhängigen Ansprüche 1 oder 10 gelöst. Vorteilhafte Ausgestaltungen und Weiterbildungen der Erfindung ergeben sich aus den Unteransprüchen 2 bis 9 und 11 bis 14.

Die vorgeschlagene Lösung bietet insbesondere den Vorteil, dass die Lage und Ausrichtung der unvermeidbaren Bindenähte zielgerichtet beeinflusst und somit im wesentlichen vorbestimmt positioniert werden. Außerdem erhält die Faserorientierung des Kunststoffes eine nahezu vorbestimmte Ausrichtung. Dadurch erhält eine solche Bindenaht eine erheblich verbesserte Festigkeit gegenüber anderen Bauteilregionen. Durch die Ausbildung insbesondere des Nabenbereiches wird erreicht, dass der Schmelzfluss, der über den Nabenbereich vornehmlich in radialer Richtung strömt, einen geänderten Verlauf einnimmt, der von der radialen Richtung abweicht und dadurch zu einer günstigeren Lage und Ausrichtung der oben beschriebenen Bindenaht führt. Der Verlauf der Bindenaht wird so gewählt, dass die auf die Bindenaht einwirkenden Kräfte oder Spannungen im wesentlichen längs verlaufen. Auf die Bindenähte quer einwirkende Kräfte werden aufgrund der gezielten und vorbestimmten Ausrichtung der Bindenähte weitestgehend vermieden bzw. vermindert. Zu diesem Zwecke sind an der Außenseite des Nabenbereichs spiralförmige Ausformungen bzw. Profilierungen angebracht, die dem Schmelzfluss einen Drall beim Füllen des Werkzeuges geben. Dieser Drall wird außerdem durch ein neues tragflächenartiges Profil der Lagerkreuzarme unterstützt. Der Effekt, der durch diese Maßnahmen bewirkt wird, ist der, dass die Fließrichtung der Kunststoffmasse während des Spritzgießvorgangs entsprechend dem Drall von der Nabe wegweisend beeinflusst bzw. umgelenkt wird. Mit dieser Maßnahme bildet sich die Bindenaht nicht mehr in radialer Ausrichtung im kritischen Bereich unterhalb der Lagerkreuzarme bzw. Streben, sondern in einem zum Lagerkreuzarm beabstandeten Bereich und in im wesentlichen winkliger, tangentialer oder bogenförmiger bzw. gekrümmter Ausrichtung.

Hierzu sind über die hülsenartige Nabenerstreckung gewindeabschnittsförmige bzw. schneckenförmige Anformungen oder Profilierungen vorgesehen, die den überströmenden Schmelzfluss der Kunststoffschmelze in einen Drall versetzen. Dadurch wird der Schmelzfluss derart beeinflusst bzw. gelenkt, dass sich die Bindenaht bzw. Bindenähte in den Durchbrüchen zwischen den Streben des Lagerkreuzes ergibt/ ergeben, die sich winklig bis quasi parallel zum Lagerkreuz erstreckt / erstrecken bzw. ausrichtet / ausrichten. Es ist jedoch auch denkbar, dass der örtliche Verlauf der Strömungen derart beeinflusst wird, dass sich die Bindenähte hinter dem Lagerkreuz ergeben. Die Profilierungen erstrecken sich hierbei über die Außenseite der hülsenartigen Nabe spiralförmig, wobei sie um ein gutes Entformen des Behältnisses zu gewährleisten derart profiliert sind, dass sie stufenförmig aus der Seitenwand der hülsenartigen Nabe heraus profiliert ausgebildet sind.

In vorteilhafter Weiterbildung der Erfindung weisen die das Lagerkreuz bildenden Streben im Schnitt ebenfalls eine den Schmelzfluss der Kunststoffschmelze begünstigende Profilierung bzw. Form auf, die derart ausgebildet ist, dass die einzelne Strebe im Querschnitt eine Dreieckprofilierung aufweist, deren Ecken abgerundet sind, so dass insbesondere eine die Strömung begünstigende Umspritzung erfolgt. Durch diese Profilierung wird die noch fließende Kunststoffmasse während des Spritzgussvorgangs in eine vorbestimmte Richtung, insbesondere von der Strebe wegweisend, gelenkt.

Um insbesondere eine die Geschwindigkeit beeinflussende Strömung auf den Flächen des Dreieckprofils zu erreichen, nimmt die Seite des Dreiecks, die der Hypotenuse entspricht, einen leichten nach innen gewölbten Verlauf ein.

In einer zweckmäßigen Ausführungsform weist die einzelne Strebe im Querschnitt ein T-Profil mit abgerundeten Ecken auf. Die auf die Strebe aufgetragene Schmelze wird so aufgetragen, dass sich im Profilverlauf der Strebe eine unterschiedliche Stärke der Schmelze ergibt.

Besonders vorteilhaft und einfach gestaltet sich das Verfahren zur Herstellung eines Kunststofflaugenbehälters der bereits genannten Art. Hierbei erfolgt im ersten Schritt das Herstellen des Lagerkreuzes als einstückiges Werkteil aus Metall, vorzugsweise aus Gusseisen. Anschließend wird das Lagerkreuz in eine Spritzgussform eingelegt. Hiernach erfolgt das Herstellen der Stirnseitenwand des Laugenbehälters, unter Umspritzen des Lagerkreuzes mit einem Kunststoff derart, dass die Einspritzung der Kunststoffmasse über einen zentralen Einspritzpunkt erfolgt, wobei das Lagerkreuz wenigstens annähernd vollständig in das Material der Stirnseitenwand eingebettet ist. Der besondere Vorteil kommt hierbei dadurch zum Tragen, dass die bereits genannten Ausformungen bzw. Profilierungen des metallischen Lagerkreuzes den Schmelzfluss der Kunststoffmasse während des Spritzgießens vom zentralen Anspritzpunkt ausgehend derart beeinflussen oder lenken, dass sich durch aufeinandertreffender Fließfronten des Schmelzflusses ergebende Bindenähte beabstandet von der Nabe und / oder Strebe ausbilden.

Die Profilierung kann in weiteren vorteilhaften Ausführungsformen so gestaltet werden, dass die Richtung und/ oder Geschwindigkeit des Schmelzflusses derart beeinflusst werden, dass sich Bindenähte ergeben, die einen zur Strebe winkligen oder im Wesentlichen rechtwinkligen Verlauf haben. Je nach auftretenden Kräfteeinwirkungen kann der Schmelzfluss durch die Ausformung des Lagerkreuzes so beeinflusst werden, dass sich für die Bindenähte ein zum Verlauf der Nabe tangentialer Verlauf ergibt. Auch gekrümmte bzw. bogenförmige Verläufe für die Bindenaht lassen sich durch die Beeinflussung des Schmelzflusses realisieren.

Ein Ausführungsbeispiel der Erfindung ist in den Zeichnungen rein schematisch dargestellt und wird nachfolgend näher beschrieben. Es zeigen:
- Fig. 1: eine perspektivische Draufsicht auf ein Lagerkreuz mit angedeuteter Schmelzflussrichtung;
- Fig. 2: eine Rückseite des Lagerkreuzes gemäß der Figur 1;
- Fig. 3: eine geschnittene Darstellung gemäß der Schnittlinie III/III in Figur 1 durch eine Strebe des Lagerkreuzes mit unsymmetrischen Profil;
- Fig. 4: eine geschnittene Darstellung einer Strebe mit einem symmetrischen Profil und
- Fig. 5: eine Schnittdarstellung des Kunststofflaugenbehälters mit umspritzten Lagerkreuz.

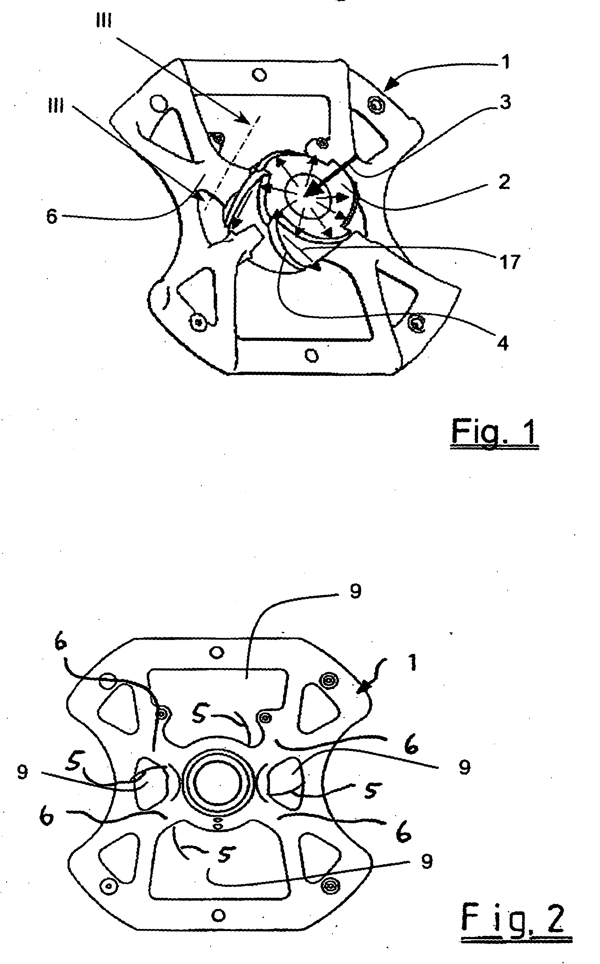

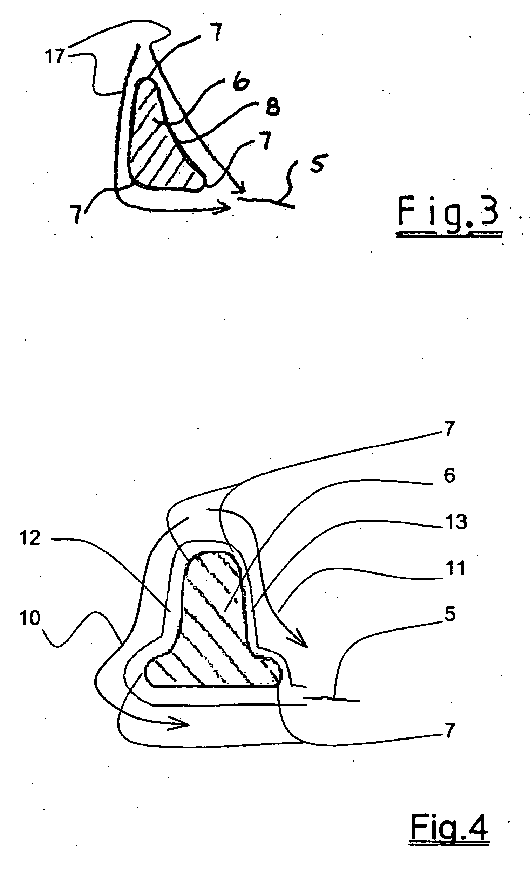

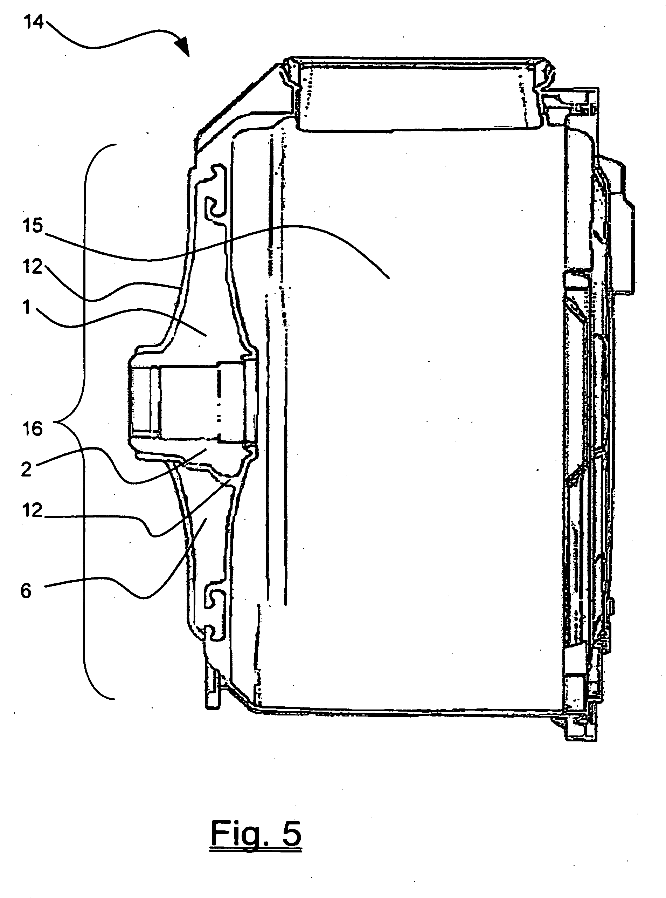

Die Fig. 1 zeigt für einen nicht näher dargestellten Kunststofflaugenbehälter für eine Waschmaschine die Einzeldarstellung eines metallischen Lagerkreuzes 1, welches in der Seitenwand eines zylinderförmig geformten Kunststoffbehälters eingebunden ist. Das metallische Lagerkreuz 1 ist dabei mit einer hülsenartigen Nabe 2 zur Aufnahme einer nicht näher dargestellten Antriebswelle für eine in dem Behälter rotierende Trommel ausgestattet. Wie aus der Fig. 1 zu erkennen ist, ist der Pfeil 3 kennzeichnend für den einzigen zentralen Anspritzpunkt der Kunststoffschmelze, die sich dann entsprechend der Richtungspfeile 17 radial aufteilt und am hülsenartigen Nabenbereich 2 entlang strömt, so dass sie gemäß der Fig. 3 oder Fig. 5 entsprechend das gesamte Lagerkreuz 1 umhüllt. Der zentrale Anspritzpunkt liegt in der hier aufgezeigten Ausführungsform im Bereich der Nabe 2.

Wie weiter aus der Fig. 1 zu erkennen ist, sind über die hülsenartige Nabenerstreckung 2 Profilierungen 4 vorgesehen, die den Schmelzfluss der Kunststoffschmelze gemäß der dargestellten Pfeile 17 derart beeinflussen, dass sich eine Bindenaht 5, wie sie beispielsweise in der Fig. 3 angedeutet ist, in einem vom Lagerkreuz 1 beabstandeten Bereich ausbildet. Wie in Fig. 2 dargestellt, sind weitere günstige Lagen für die Bindenähte in den Lagerkreuz-Durchbrüchen 9 vorgesehen. Die Bindenaht hat hierbei in ihrem Verlauf einen von der Radialen abweichenden Verlauf. Wie hier weiterhin ersichtlich ist, kann der Verlauf der Bindenähte gekrümmt sein, wobei eine tangentiale Orientierung bevorzugt wird. Es sind weiterhin alternative Verlaufsrichtungen der Bindenähte 5 denkbar, beispielsweise quasi parallel zu einzelnen Streben 6 bzw. unter einem Winkel verlaufend zu einzelnen Streben 6 des Lagerkreuzes 1. Aus der Fig. 1 sind deutlich die Ausformungen bzw. Profilierungen 4 zu erkennen, die sich über die Außenseite der hülsenartigen Nabe 2 spiralförmig bzw. schraubenförmig erstrecken. Somit erhält die Schmelze den erfindungsgemäßen Drall, so dass sich die eindrehende Schmelze entsprechend um das Lagerkreuz 1 legt. Um insbesondere ein Entformen zu gewährleisten, ist die Profilierung 4 stufenförmig heraus profiliert.

In der Fig. 5 ist in einer Gesamtansicht der Kunststofflaugenbehälter 14 in einer Schnittdarstellung aufgezeigt, welcher zumindest aus einem zylindrischen Mantel 15 und zumindest einer Stirnseitenwand 16 besteht. Das Lagerkreuz 1 mit seiner im wesentlichen zentral angeordneten hülsenförmigen Nabe und seinen von der Nabe ausgehenden im wesentlichen radial nach außen verlaufenden Streben 6 ist mit Kunststoffmasse 12 umhüllt. Innerhalb des Kunststofflaugenbehälters 14 ist die Trommel rotierbar angeordnet.

Die das Lagerkreuz 1 bildenden Streben bzw. Lagerkreuzarme 6, in der Einzeldarstellung gemäß der Fig. 3, weisen ebenfalls eine gemäß Pfeilrichtungen für die Kunststoffschmelze begünstigende Profilierung auf. Dabei sind die einzelnen Streben 6 im Querschnitt dreieckig profiliert, wobei deren Ecken 7 abgerundet ausgebildet sind. Wie aus der Fig. 3 zu erkennen ist, nimmt die Seite des Dreiecks, die der Hypotenuse 8 entspricht, einen leichten nach innen gewölbten Verlauf ein. Hierdurch wird ersichtlich, dass, gemäß der dargestellten Pfeile 17, die sich einstellenden Einzelströme der Schmelze sich derart aufeinander legen, so dass sich die, wie oben schon erwähnt, für die Festigkeit des Kunststofflaugenbehälters günstige Lage der Bindenaht 5 ergibt. In diesem Beispiel liegt die Bindenaht 5 in einem Abstand zur Strebe 6. Durch die für eine Strömung optimierte Querschnittsform bzw. Profilierung der Streben 6 kann auf einfache Weise sowohl die Fleißgeschwindigkeit als auch die Fließrichtung der Kunststoffmasse während des Spritzgießvorgangs vorbestimmt werden.

Wie in Fig. 4 aufgezeigt, ist es auch möglich, bei Streben mit symmetrischem Profil die Fließrichtung der flüssigen bzw. zähflüssigen Kunststoffmasse richtungsbestimmend zu beeinflussen. Hierbei wird beispielhaft bei einer Strebe 6 mit im Querschnitt symmetrischem T-Profil eine zur Strebe 6 beabstandete Bindenaht 5 erwirkt. Hierzu wird der Anguss so ausgerichtet, dass sich für die aufgetragene flüssige Kunststoffmasse bzw. Schmelze auf einer Seite der Strebe 6 eine größere Wandstärke 12 im Bezug auf die gegenüberliegende Wandstärke 13 einstellt. Die Fliessrichtung der Fliessfront mit der größeren Wandstärke 12 ist mit dem Pfeil 10 skizziert. Die Fliessrichtung der Fliessfront mit der geringeren Wandstärke 13 ist mit dem Pfeil 11 skizziert. Die Fliessfront der flüssigen Kunststoffmasse mit der größeren Wandstärke 12 hat, eine höhere Fliessgeschwindigkeit gegenüber der Fliessgeschwindigkeit der Fliessfront der flüssigen Kunststoffmasse mit der geringeren Wandstärke 13. Hierdurch treffen die beiden Fliessfronten in einem Abstand zur Strebe 6 aufeinander, wobei an der Stelle des Auftreffens die Bindenaht entsteht. Mit dieser Maßnahme wird eine von der Strebe 6 und / oder von der Nabe 2 beabstandete Bindenaht 5 erreicht.

## Patentansprüche

1. Kunststofflaugenbehälter (14) für eine Waschmaschine umfassend ein zylinderförmig geformtes Behältnis, welches aus einer spritzgegossenen Kunststoffmasse besteht, mit einem Mantel (15) und zumindest einer Stirnseitenwand (16), wobei in der Stirnseitenwand (16) ein metallisches Lagerkreuz (1) mit einer hülsenartigen Nabe (2) und mit zumindest einer an der Nabe (2) angeformten Strebe (6) in der Kunststoffmasse eingebunden ist,
**dadurch gekennzeichnet,**
**dass** das metallische Lagerkreuz (1) Ausformungen bzw. Profilierungen (4) aufweist, die den Schmelzfluss der Kunststoffmasse während des Spritzgießens in vorbestimmte Richtungen (17) lenken, derart, dass sich durch aufeinandertreffende Fließfronten des Schmelzflusses ergebende Bindenähte (5) beabstandet von der Nabe (2) und / oder Strebe (6) ausbilden.

2. Kunststofflaugenbehälter (14) nach Anspruch 1,
**dadurch gekennzeichnet,**
**dass** die hülsenartige Nabe (2) an ihrem Außenumfang Profilierungen (4) aufweist, die sich über die Außenseite der hülsenartigen Nabe (2) spiralförmig erstrecken.

3. Kunststofflaugenbehälter (14) nach Anspruch 2,
**dadurch gekennzeichnet,**
**dass** die Profilierung (4) stufenförmig ausgebildet ist.

4. Kunststofflaugenbehälter (14) nach Anspruch 1,
**dadurch gekennzeichnet,**
**dass** die das Lagerkreuz (1) bildende mindestens eine Strebe (6) eine Profilierung aufweist, die während des Spritzgießens den Schmelzfluss der Kunststoffmasse in vorbestimmte Richtungen lenkt.

5. Kunststofflaugenbehälter (14) nach Anspruch 4,
**dadurch gekennzeichnet,**
**dass** die einzelne Strebe (6) im Querschnitt eine Dreieckform aufweist, deren Ecken (7) abgerundet sind.

6. Kunststofflaugenbehälter (14) nach Anspruch 5,
**dadurch gekennzeichnet,**
**dass** die Seite des Dreiecks, die der Hypotenuse (8) entspricht, einen leichten nach innen gewölbten Verlauf einnimmt.

7. Kunststofflaugenbehälter (14) nach Anspruch 4,
**dadurch gekennzeichnet,**
**dass** die einzelne Strebe (6) im Querschnitt ein T-Profil mit abgerundeten Ecken (7) aufweist, wobei während des Spritzgießens die auf die Strebe (6) aufgetragene Kunststoffmasse (12, 13) im Profilverlauf eine unterschiedliche Stärke aufweist.

8. Verfahren zur Herstellung eines Kunststofflaugenbehälters (14) für eine Waschmaschine mit einem zylinderförmig geformten Behältnis bestehend aus zumindest einer Stirnseitenwand (16) und einem Mantel (15), und mit einem in der Stirnseitenwand (16) angeordneten Lagerkreuz (1), in deren Zentrum eine Nabe (2) angeordnet ist und zumindest eine an der Nabe (2) angeformte Strebe (6) enthält, wobei das Verfahren folgende Schritte aufweist:
- Herstellen des Lagerkreuzes (1) als einstückiges Werkteil aus Metall, vorzugsweise aus Gusseisen;
- Einlegen des Lagerkreuzes (1) in eine Spritzgussform;
- Herstellen mindestens einer Stirnseitenwand (16) des Laugenbehälters (14) unter Umspritzen des Lagerkreuzes (1) mit einem Kunststoff derart, dass die Einspritzung der Kunststoffmasse über einen zentralen Anspritzpunkt (3) erfolgt, wobei das Lagerkreuz (1) wenigstens annähernd vollständig in das Material der Stirnseitenwand (16) eingebettet ist,
**dadurch gekennzeichnet,**
**dass** während des Spritzgießens der Schmelzfluss der Kunststoffmasse (12, 13) derart gerichtet ist, dass sich die aufgrund aufeinandertreffender Fließfronten entstehenden Bindenähte (5) in den Bereichen (9) zwischen den Streben (6) erstrecken, wobei das metallische Lagerkreuz (1) Ausformungen bzw. Profilierungen (4) aufweist, die den Schmelzfluss der Kunststoffmasse während des Spritzgießens vom zentralen Anspritzpunkt ausgehend derart beeinflussen oder lenken, dass sich durch aufeinan dertreffender Fließfronten des Schmelzflusses ergebende Bindenähte (5) beabstandet von der Nabe (2) und / oder Strebe (6) ausbilden.

9. Verfahren zur Herstellung eines Kunststofflaugenbehälters (14) für eine Waschmaschine nach Anspruch 8
**dadurch gekennzeichnet,**
**dass** während des Spritzgießens der Schmelzfluss der Kunststoffmasse derart gerichtet ist, dass die aufgrund aufeinandertreffender Fließfronten entstehenden Bindenähte (5) einen im wesentlichen zum Verlauf der Strebe (6) winkligen Verlauf haben.

10. Verfahren zur Herstellung eines Kunststofflaugenbehälters (14) für eine Waschmaschine nach einem der Ansprüche 8 oder 9
**dadurch gekennzeichnet,**
**dass** während des Spritzgießens der Schmelzfluss der Kunststoffmasse derart gerichtet ist, dass die aufgrund aufeinandertreffender Fließfronten entstehenden Bindenähte (5) einen zum Verlauf des Umfangs der Nabe (2) im wesentlichen tangentialen Verlauf haben.

11. Verfahren zur Herstellung eines Kunststofflaugenbehälters (14) für eine Waschmaschine nach einem der Ansprüche 8 bis 10
**dadurch gekennzeichnet,**
**dass** während des Spritzgießens der Schmelzfluss der Kunststoffmasse derart gerichtet ist, dass die aufgrund aufeinandertreffender Fließfronten entstehenden Bindenähte (5) einen gekrümmten Verlauf haben.

## Claims

1. Plastics material washing drum (14) for a washing machine comprising a receptacle, which is moulded in the shape of a cylinder, is produced from an injection-moulded plastics material compound and has an outside surface (15) and at least one end face wall (16), wherein a metal bearing (1) with a sleeve-shaped hub (2) and with at least one strut (6) integrally moulded on the hub (2) is incorporated in the plastics material compound in the end face wall (16), **characterised in that** the metal bearing (1) includes mouldings or respectively profilings (4), which direct the fused mass of the plastics material compound in predetermined directions (17) during the injection moulding process in such a manner that weld lines (5) produced by merging flow fronts of the fused mass are formed at a spacing from the hub (2) and/or strut (6).

2. Plastics material washing drum (14) according to claim 1, **characterised in that** on its outside circumference, the sleeve-shaped hub (2) includes profilings (4), which extend in a spiral manner over the outside of the sleeve-shaped hub (2).

3. Plastics material washing drum (14) according to claim 2, **characterised in that** the profiling (4) is step-shaped.

4. Plastics material washing drum (14) according to claim 1, **characterised in that** the at least one strut (6) forming the bearing (1) includes a profiling, which directs the fused mass of the plastics material compound in predetermined directions during the injection moulding process.

5. Plastics material washing drum (14) according to claim 4, **characterised in that** the single strut (6) has a triangular cross-section, the corners (7) of which are rounded.

6. Plastics material washing drum (14) according to claim 5, **characterised in that** the course of the side of the triangle that corresponds to the hypotenuse (8) is slightly inwardly curved.

7. Plastics material washing drum (14) according to claim 4, **characterised in that** the single strut (6) has a T-profile with rounded corners (7) in cross-section, wherein during the injection moulding process the plastics material compound (12, 13) applied onto the strut (6) has a different thickness over the course of the profile.

8. Method for producing a plastics material washing drum (14) for a washing machine including a cylindrically shaped receptacle comprising at least one end face wall (16) and an outside surface (15), and having, disposed in the end face wall (16), a bearing (1), in the centre of which a hub (2) is disposed and contains at least one strut (6) integrally moulded on the hub (2), wherein the method includes the following method steps:
- producing the bearing (1) as a single part workpiece made of metal, preferably cast iron;
- inserting the bearing (1) into an injection mould assembly;
- producing at least one end face wall (16) of the washing drum (14) by injecting round the bearing (1) with a plastics material in such a manner that the injection of the plastics material compound is effected via a central injection point (3), wherein the bearing (1) is embedded at least approximately completely into the material of the end face wall (16(),
**characterised in that** during the injection moulding process the fused mass of the plastics material compound (12, 13) is directed in such a manner that the weld lines (5) produced on account of the merging flow fronts extend in the regions (9) between the struts (6), wherein the metal bearing (1) includes mouldings or respectively profilings (4), which influence or direct the fused mass of the plastics material compound during the injection moulding process starting from the injection point in such a manner that weld lines (5) produced by merging flow fronts of the fused mass are formed at a spacing from the hub (2) and/or strut (6).

9. Method for producing a plastics material washing drum (14) for a washing machine according to claim 8 , **characterised in that** during the injection moulding process the fused mass of the plastics material compound is directed in such a manner that the course of the weld lines (5) produced on account of the merging flow fronts is substantially angular relative to the course of the strut (6).

10. Method for producing a plastics material washing drum (14) for a washing machine according to one of claims 8 or 9, **characterised in that** during the injection moulding process the fused mass of the plastics material compound is directed in such a manner that the course of the weld lines (5) produced on account of the merging flow fronts is substantially tangential relative to the course of the circumference of the hub (2).

11. Method for producing a plastics material washing drum (14) for a washing machine according to one of claims 8 to 10, **characterised in that** during the injection moulding process the fused mass of the plastics material compound is directed in such a manner that the course of the weld lines (5) produced on account of the merging flow fronts is curved.

## Revendications

1. Réservoir à lessive (14) en matière plastique pour lave-linge, englobant un réceptacle de forme cylindrique constitué d'une masse de matière plastique coulée par injection, comprenant une enveloppe (15) et au moins une paroi latérale frontale (16), un croisillon métallique de portée (1), doté d'un moyeu (2) en forme de douille et d'au moins une entretoise (6) faisant corps avec ledit moyeu (2), étant intégré dans la masse de matière plastique,
**caractérisé par le fait**
**que** le croisillon métallique de portée (1) est respectivement muni de configurations ou de profilages (4) guidant, dans des directions prédéterminées (17), le flux de la masse de matière plastique en fusion, au cours de la coulée par injection, de manière qu'il se forme, à distance du moyeu (2) et/ou de l'entretoise (6), des joints de solidarisation (5) produits par des fronts du flux en fusion venant incider les uns sur les autres.

2. Réservoir à lessive (14) selon la revendication 1,
**caractérisé par le fait**
**que** le moyeu (2) en forme de douille comporte, sur son pourtour extérieur, des profilages (4) s'étendant hélicoïdalement sur la face extérieure dudit moyeu (2) en forme de douille.

3. Réservoir à lessive (14) selon la revendication 2,
**caractérisé par le fait**
**que** le profilage (4) est réalisé en forme de gradin.

4. Réservoir à lessive (14) selon la revendication 1,
**caractérisé par le fait**
**que** l'entretoise (6) prévue au minimum, matérialisant le croisillon de portée (1), offre un profilage guidant dans des directions prédéterminées, lors de la coulée par injection, le flux de la masse de matière plastique en fusion.

5. Réservoir à lessive (14) selon la revendication 4,
**caractérisé par le fait**
**que** l'entretoise individuelle (6) possède, en coupe transversale, une forme triangulaire dont les coins (7) sont arrondis.

6. Réservoir à lessive (14) selon la revendication 5,
**caractérisé par le fait**
**que** le côté du triangle, qui correspond à l'hypoténuse (8), présente un tracé à léger bombement vers l'intérieur.

7. Réservoir à lessive (14) selon la revendication 4,
**caractérisé par le fait**
**que** l'entretoise individuelle (6) possède, en coupe transversale, un profil en T à coins arrondis (7), sachant que, lors de la coulée par injection, la masse de matière plastique (12, 13) déposée sur ladite entretoise (6) présente une épaisseur différente sur le tracé dudit profil.

8. Procédé de fabrication d'un réservoir à lessive (14) en matière plastique pour lave-linge, comprenant un réceptacle de forme cylindrique comportant une enveloppe (15) et au moins une paroi latérale frontale (16) ; un croisillon de portée (1) disposé dans ladite paroi latérale frontale (16), et au centre duquel se trouve un moyeu (2) ; et au moins une entretoise (6) faisant corps avec ledit moyeu (2), ledit procédé englobant les étapes suivantes :
- production du croisillon de portée (1) en tant que pièce monobloc en métal, de préférence en fonte ;
- insertion dudit croisillon de portée (1) dans un moule de coulée par injection ;
- façonnage d'au moins une paroi latérale frontale (16) du réservoir à lessive (14), par enrobage injecté du croisillon de portée (1) à l'aide d'une matière plastique, de telle sorte que l'injection de la masse de matière plastique s'opère par l'intermédiaire d'un point central (3) d'amorce d'injection, sachant que ledit croisillon de portée (1) est, au moins approximativement, noyé en totalité dans le matériau de la paroi latérale frontale (16),
**caractérisé par le fait**
**que**, au stade de la coulée par injection, le flux de la masse de matière plastique en fusion (12, 13) est dirigé de façon telle que les joints de solidarisation (5), produits par des fronts de flux venant incider les uns sur les autres, s'étendent dans les régions (9) situées entre les entretoises (6), le croisillon métallique de portée (1) étant respectivement muni de configurations ou de profilages (4) qui, lors de la coulée par injection, influencent ou guident le flux de la masse de matière plastique en fusion, à partir du point central d'amorce d'injection, de manière que des joints de solidarisation (5), produits par des fronts du flux en fusion venant incider les uns sur les autres, se forment à distance respective du moyeu (2) et/ou de l'entretoise (6).

9. Procédé de fabrication d'un réservoir à lessive (14) en matière plastique pour lave-linge, selon la revendication 8,
**caractérisé par le fait**
**que**, au stade de la coulée par injection, le flux de la masse de matière plastique en fusion est dirigé de façon telle que les joints de solidarisation (5), produits par des fronts de flux venant incider les uns sur les autres, possèdent un tracé décrivant sensiblement un angle avec le tracé de l'entretoise (6).

10. Procédé de fabrication d'un réservoir à lessive (14) en matière plastique pour lave-linge, selon l'une des revendications 8 ou 9,
**caractérisé par le fait**
**que**, au stade de la coulée par injection, le flux de la masse de matière plastique en fusion est dirigé de façon telle que les joints de solidarisation (5), produits par des fronts de flux venant incider les uns sur les autres, possèdent un tracé sensiblement tangentiel au tracé du pourtour du moyeu (2).

11. Procédé de fabrication d'un réservoir à lessive (14) en matière plastique pour lave-linge, selon l'une des revendications 8 à 10,
**caractérisé par le fait**
**que**, au stade de la coulée par injection, le flux de la masse de matière plastique en fusion est dirigé de façon telle que les joints de solidarisation (5), produits par des fronts de flux venant incider les uns sur les autres, possèdent un tracé curviligne.
